# EUROPÄISCHE PATENTSCHRIFT

(11) **EP 3 382 366 B1**
(45) Veröffentlichungstag und Bekanntmachung des Hinweises auf die Patenterteilung: **30.08.2023**
(21) Anmeldenummer: 18164301.6
(22) Anmeldetag: 27.03.2018
(51) Int. Cl.: G01N 1/20, G01N 1/10

(54) **PROBENENTNAHMESYSTEM ZUR ENTNAHME VON TREIBSTOFFPROBEN**
SAMPLING SYSTEM FOR TAKING FUEL SAMPLES
SYSTÈME DE PRÉLÈVEMENT D'ÉCHANTILLONS DESTINÉ AU PRÉLÈVEMENT D'ÉCHANTILLONS DE CARBURANT

(30) Priorität: 27.03.2017 CZ 20170171
(43) Veröffentlichungstag der Anmeldung: 03.10.2018
(73) Patentinhaber: Rofa Praha S.R.O., 252 65 Tursko (CZ)
(72) Erfinder: SOLAR, Milan, 273 24 Velvary (CZ); FIEDLER, Matthias, 3411 Klosterneuburg-Weidling (AT)
(74) Vertreter: Canzler & Bergmeier Patentanwälte Partnerschaft mbB

(56) Entgegenhaltungen:
- DE-U1- 29 504 081
- US-A- 4 628 748
- US-A- 4 905 510
- US-A1- 2015 247 784
- US-A1- 2017 058 670

## Beschreibung

Die vorliegende Erfindung betrifft ein Probenentnahmesystem zur Entnahme von Treibstoffproben aus einem externen Tank mit einem Probentank zur Aufnahme des Treibstoffs. Das Probenentnahmesystem weist ferner zumindest eine Zuleitung, mittels der der Treibstoff von dem externen Treibstofftank in den Probentank geleitet werden kann, und zumindest eine Ableitung, mittels der der Treibstoff aus dem Probentank abgeleitet werden kann, auf. Ferner umfasst das Probenentnahmesystem zumindest eine Probenentnahmevorrichtung, mit deren Hilfe zumindest eine Teilmenge des Treibstoffs aus dem Probentank entnommen werden kann.

Außerdem betrifft die vorliegende Erfindung ein Verfahren zum Betreiben des Probenentnahmesystems.

In der US 9,255,862 B2 ist eine Vorrichtung zur Entnahme von Stichproben offenbart. Die Vorrichtung umfasst eine Zuleitung und ein Ableitung, durch die ein Treibstoff in die Vorrichtung eingeleitet bzw. aus der Vorrichtung abgeleitet werden kann. Außerdem weist die Vorrichtung eine Probenentnahmevorrichtung auf, an der eine Probe entnommen werden kann.

In der US 2015/247784 A1 ist eine Vorrichtung zur Entnahme einer Probe offenbart. Die Probe, welche eine Flüssigkeit sein kann, wird über Leitungen aus einem Tank in einen Entnahmetank geleitet. Vom Entnahmetank wird die Probe in einen Probentank geleitet, welcher von der Vorrichtung abgekoppelt und zur Analyse der Probe in ein Labor transportiert wird.

In der US 2017/058670 A1 ist ein Probenbehälter offenbart. Der Probenbehälter wird beispielsweise an eine Pipeline angeschlossen. Über eine Leitung wird eine Probe in den Probenbehälter geleitet. Der Probenbehälter wird abgekoppelt und vom Ort der Probenentnahme zur Analyse der Probe in ein Labor transportiert.

In der US 4 905 510 A1 ist eine Vorrichtung zur Entnahme einer Probe aus einer Pipeline offenbart. An der Pipeline ist die Vorrichtung fest angeordnet. Die Vorrichtung weist einen Tank auf, in den die Probe eingeleitet und zur Probenentnahme wieder ausgeleitet werden kann.

In der US 4,628,748 A1 ist ein Probenentnahmesystem zur Entnahme von Abwasserproben offenbart.

Aufgabe der vorliegenden Erfindung ist es somit, den Stand der Technik zu verbessern.

Die Aufgabe wird gelöst durch ein Probenentnahmesystem und eine Verfahren zum Betreiben des Probenentnahmesystems mit den Merkmalen der unabhängigen Patentansprüche. Vorteilhafte Ausgestaltungen ergeben sich aus den Unteransprüchen.

Vorgeschlagen wird ein Probenentnahmesystem zur Entnahme von Treibstoffproben aus einem externen Treibstofftank, wobei das Probenentnahmesystem einen Probentank zur Aufnahme des Treibstoffs aufweist. Der externe Treibstofftank ist dabei ein Treibstofftank, der nicht Teil des Probenentnahmesystems ist. Der externe Treibstofftank kann beispielsweise ein Treibstofftank auf einem Lastkraftwagen, ein Treibstofftank an einer Tankstelle, ein Treibstofftank an einer Treibstoffraffinerie, ein Treibstofftank an einer Treibstoffverladestation oder ein Treibstofftank in oder an einem Gebäude sein. Mittels zumindest einer Zuleitung kann der Treibstoff von dem externen Treibstofftank in den Probentank geleitet werden. Zusätzlich kann mittels zumindest einer Ableitung der Treibstoff aus dem Probentank zurück in den Treibstofftank abgeleitet werden. Des Weiteren weist das Probenentnahmesystem zumindest eine Probenentnahmevorrichtung auf, mit deren Hilfe zumindest eine Teilmenge des Treibstoffs aus dem Probentank entnommen werden kann.

Erfindungsgemäß ist das Probenentnahmesystem als eine mobile, d.h. nicht ortsfest gebundene, Anlage ausgebildet. Das Probenentnahmesystem ist eine autarke mobile Anlage, wobei alle für den Betrieb des Probenentnahmesystems nötigen zusätzlichen Komponenten auf der mobilen Anlage integriert sind. Durch die mobile Anlage kann das Probenentnahmesystem zu einem externen Einsatzort gebracht werden. Es muss beispielsweise nicht mehr fest an einer Treibstoffraffinerie oder an einem Treibstoffverladeort installiert werden. Dadurch ist eine hohe Flexibilität des Probenentnahmesystems gegeben, wodurch Kosten für den Betreiber eingespart werden, da dieser nur noch eine oder wenige Probenentnahmesysteme für mehrere Treibstoffraffinerien oder Treibstoffverladeorte anschaffen muss.

In einer vorteilhaften Weiterbildung der Erfindung ist das Probenentnahmesystem auf einem Kraftfahrzeug angeordnet. Alternativ kann das Probenentnahmesystem auch auf einem Anhänger für ein Kraftfahrzeug angeordnet sein. Dadurch ist das Probenentnahmesystem besonders einfach zu transportieren.

Zusätzlich oder alternativ ist es vorteilhaft, wenn das Probenentnahmesystem einen Grundträger umfasst, an dem die übrigen Funktionselemente der Probenentnahmevorrichtung direkt oder indirekt befestigt sind. Dadurch sind alle Funktionselemente kompakt an dem Probenentnahmesystem angeordnet.

Der Probentank umfasst eine Mischvorrichtung, mittels der der im Probentank vorhandene Treibstoff gemischt werden kann. Die Mischvorrichtung kann beispielsweise eine Rühranlage sein, die mittels eines Rührers den Treibstoff mischt. Der Treibstoff kann beispielsweise dann gemischt werden, wenn der Treibstoff aus mehreren externen Tanks in den Probentank geleitet wurde. Dann kann daraus eine gleichmäßige Treibstoffprobe gemischt werden.

Ferner ist es von Vorteil, wenn die Probenentnahmevorrichtung mittels einer Transportleitung mit dem Probentank verbunden ist. Dadurch kann die Probenentnahmevorrichtung von dem Probentank räumlich getrennt angeordnet sein. Außerdem können dadurch mehrere Probenentnahmevorrichtungen an verschiedenen Stellen des Probenentnahmesystems betrieben werden. An der Probenentnahmevorrichtung kann eine Treibstoffprobe entnommen werden, die in ein Labor gebracht und dort analysiert wird. Die Probenentnahmevorrichtung kann außerdem einen Auslaufhahn und/oder eine Dossiervorrichtung aufweisen, so dass eine bestimmte Teilmenge an Treibstoff an der Probenentnahmevorrichtung in einen Behälter abgefüllt werden kann. Die Probenentnahmevorrichtung kann auch ein Ventil, beispielsweise ein Drehventil, aufweisen, das zu der angesprochenen Probenentnahme manuell oder elektrisch geöffnet und geschlossen werden kann, um die Teilmenge an Treibstoff abzuzapfen. Der in den Behälter abgezapfte Treibstoff kann dann zur Analyse in ein Labor gegeben werden.

Vorteilhaft ist es des Weiteren, wenn an der Zuleitung eine Kupplung angeordnet ist. Zusätzlich oder alternativ kann auch an der Ableitung eine Kupplung angeordnet sein. Mittels der Kupplung kann eine mit dem externen Treibstofftank verbundene Verbindungsleitung angekuppelt werden, so dass der Treibstoff von dem externen Treibstofftank über die Verbindungsleitung in das Probenentnahmesystem geleitet werden kann. Dabei ist die Verbindungsleitung an der Kupplung mit der Zuleitung gekoppelt. Zusätzlich oder alternativ kann über die an der Kupplung angekuppelte Verbindungsleitung der Treibstoff von dem Probenentnahmesystem auch wieder zurück in den externen Treibstofftank geleitet werden. Hierbei ist die Verbindungsleitung an der Kupplung mit der Ableitung gekoppelt. An dem Probenentnahmesystem können selbstverständlich auch zwei Verbindungsleitungen angekuppelt sein, nämlich an der Kupplung zur Zuleitung und an der Kupplung zur Ableitung.

In einer vorteilhaften Weiterbildung der Erfindung umfassen die Zuleitung, die Ableitung, die Verbindungsleitung(en) und/oder die Transportleitungen Rohrleitungen. Dadurch ist eine hohe Stabilität der angesprochenen Leitungen gegeben. Zusätzlich oder alternativ können die Zuleitung, die Ableitung, die Verbindungsleitung(en) und/oder die Transportleitungen auch flexible Leitungen umfassen. Dadurch ist die Flexibilität der angesprochenen Leitungen erhöht.

Um eine Sicherheit des Probenentnahmesystems zu erhöhen, ist es vorteilhaft, wenn die Zuleitung, die Ableitung, die Verbindungsleitung und/oder die Transportleitung eine Gasrückführung für Treibstoffdämpfe aufweist. Da der Treibstoff im Allgemeinen während der Probenentnahme Gase bilden kann, die sich beispielsweise an elektrischen Komponenten des Probenentnahmesystems entzünden können, ist die Gasrückführung eine wichtige Sicherheitseinrichtung. Die Gasrückführung kann beispielsweise eine Gasleitung an der Zuleitung, der Ableitung, der Verbindungsleitung(en) und/oder der Transportleitung sein, über die die entzündlichen Gase vorzugsweise mittels einer Absaugung abgesaugt werden. Die Gasleitung kann dazu eine Öffnung aufweisen, die vorteilhafterweise im Bereich eines Endes der besagten Leitungen und/oder der Kupplungen angeordnet ist. Zusätzlich oder alternativ kann die Gasrückführung auch im Bereich der Probenentnahmevorrichtung angeordnet sein, da hier aufgrund des Abfüllens des Treibstoffs in den Behälter eine erhöhte Gasbildung gegeben ist.

Ebenfalls ist es von Vorteil, wenn der Probentank einen Temperatursensor zur Messung der Temperatur des Treibstoffs im Probentank umfasst. Der Temperatursensor kann beispielsweise auch in der Zuleitung, der Ableitung, der Verbindungsleitung und/oder der Transportleitung angeordnet sein. Der Temperatursensor kann auch insbesondere mit dem Treibstoff in direktem Kontakt stehen, um ein unverfälschtes Messsignal zu erhalten. Anhand der gemessenen Temperatur kann das Probenentnahmesystem abgeschaltet werden, wenn die Temperatur des Treibstoffs einen Wert überschreitet, da sich der Treibstoff selbst entzünden kann.

Vorteilhaft ist es auch, wenn der Probentank zumindest einen Füllstandssensor umfasst. Dabei können beispielsweise mehrere Füllstandssensoren angeordnet sein, die bei einem bestimmten Niveau des Treibstoffs im Probentank ein Signal abgeben. Dadurch kann beispielsweise erkannt werden, wenn der Probentank eine definierte Treibstoffmenge umfasst und z. B. zu 50%, zu 90% oder zu 100% gefüllt ist.

Ferner ist es von Vorteil, wenn das Probenentnahmesystem eine oder mehrere Pumpen aufweist, mit deren Hilfe der Treibstoff vom externen Treibstofftank zum Probentank gepumpt werden kann. Mittels der einen oder mehreren Pumpen kann der Treibstoff zusätzlich oder alternativ vom Probentank zur Probenentnahmevorrichtung gepumpt werden. Zusätzlich oder alternativ kann der Treibstoff auch wieder von dem Probenentnahmesystem zurück zum externen Treibstofftank gepumpt werden.

Ebenfalls ist es von Vorteil, wenn das Probenentnahmesystem zumindest ein Ventil aufweist, mit dessen Hilfe die Zuleitung, die Ableitung die Transportleitung und/oder die Verbindungsleitung abgesperrt werden können. Das zumindest eine Ventil kann beispielsweise elektrisch angesteuert werden. Es kann zum Beispiel der Fluss des Treibstoffs unterbrochen werden, wenn ein bestimmter Füllstand im Probentank und/oder eine bestimmte Zeit des Befüllens des Probentanks erreicht ist. Das Ventil kann aber auch manuell geschlossen und/oder geöffnet werden. Im Ventil oder im Bereich des Ventils kann des Weiteren ein Durchflussmesser angeordnet sein, der eine durchgeflossene Menge an Treibstoff durch das Ventil misst, so dass auf eine Treibstoffmenge im Probentank geschlossen werden kann.

Vorteilhaft ist es außerdem, wenn das Probenentnahmesystem eine Steuerung umfasst, mit deren Hilfe der Temperatursensor und/oder der Füllstandssensor überwacht werden kann. Zusätzlich oder alternativ kann mit Hilfe der Steuerung auch die Pumpe und/oder das Ventil angesteuert werden. Die Steuerung ist ferner derart ausgebildet, dass sie das Befüllen und/oder das Entleeren des Probentanks und/oder das Mischen des Treibstoffs im Probentank überwachen kann. Wenn beispielsweise der Treibstoff einen bestimmten Füllstand im Probentank erreicht hat, kann sie ein Ventil in der Zuleitung schließen, so dass ein weiteres Befüllen unterbrochen ist. Daraufhin kann die Steuerung die Mischvorrichtung im Probentank aktivieren, so dass der Treibstoff vermischt wird. Nach dem Mischen kann die Steuerung ein Ventil in der Transportleitung öffnen und eine Pumpe in der Transportleitung aktivieren, so dass die Teilmenge des Treibstoffs zur Probenentnahme an die Probenentnahmevorrichtung geleitet wird. In einem weiteren Schritt kann die Steuerung den Probentank über die Ableitung entleeren, indem sie ein Ventil in der Ableitung öffnet und eine Pumpe in der Ableitung aktiviert.

Die Steuerung kann auch ein Display umfassen, an dem ein Personal den Betriebszustand des Probenentnahmesystems überwachen kann. Die Steuerung kann auch Bedienelemente aufweisen, an denen Befehle zum Betrieb des Probenentnahmesystems eingegeben werden können.

Des Weiteren wird ein Verfahren zum Betreiben eines Probenentnahmesystems vorgeschlagen, das beispielsweise nach einem oder mehreren Merkmal(en) der vorangegangenen und/oder nachfolgenden Beschreibung ausgebildet ist. Bei dem Verfahren wird das Probenentnahmesystem zuerst an einen externen Treibstofftank transportiert, um daraus eine Treibstoffprobe zu entnehmen. Dazu wird das Probenentnahmesystem mittels einer Zuleitung an den externen Treibstofftank angekoppelt. Daraufhin wird der Treibstoff zur Probennahme vom externen Treibstofftank in einen Probentank des Probenentnahmesystems geleitet. Nach der Probennahme wird das Probenentnahmesystem wieder vom externen Treibstofftank abgekoppelt.

Durch die Mobilität des Probenentnahmesystems kann mit Hilfe nur eines Probenentnahmesystems eine Vielzahl Proben aus mehreren, auch räumlich weit getrennten, externen Treibstofftanks entnommen werden, so dass Kosten eingespart werden.

Außerdem kann die Probe am Ort des externen Treibstofftanks entnommen werden. Auf einen Transport des externen Treibstofftanks zum Probenentnahmesystem kann damit verzichtet werden. Dies spart weitere Kosten ein, da es im Allgemeinen kostengünstiger, einfacher und weniger zeitaufwändig ist, das Probenentnahmesystem zum externen Treibstofftank zu transportieren als den externen Treibstofftank zum Probenentnahmesystem.

In einer vorteilhaften Weiterbildung des Verfahrens wird vor dem Abkoppeln des Probenentnahmesystems der Treibstoff mittels einer Ableitung aus dem Probentank entleert. Dabei kann der sich im Probentank befindliche Treibstoff vollständig in den externen Treibstofftank zurückgeführt werden. Dadurch wird kein Treibstoff verschwendet. Alternativ kann der Treibstoff aus dem Probentank auch direkt an eine Vorrichtung geleitet werden, die den Treibstoff verwertet.

Ferner wird während und/oder nach dem Einleiten des Treibstoffs in den Probentank eine Teilmenge des Treibstoffs an eine Probenentnahmevorrichtung geleitet. Die Probenentnahmevorrichtung kann beispielsweise einen Auslaufhahn aufweisen, durch den der Treibstoff in einen Behälter gefüllt werden kann. Der Auslaufhahn kann des Weiteren beispielsweise von der Steuerung geöffnet oder geschlossen werden, um den Treibstoff am Auslaufhahn auszulassen oder um das Auslassen zu unterbrechen. Der Auslaufhahn kann aber auch von einem Personal manuell geöffnet werden, wenn das Personal den Treibstoff in einem Behälter abfüllt. Die Probenentnahmevorrichtung kann beispielsweise ein drehbares Kugelventil aufweisen, das durch einfache Drehung geöffnet und geschlossen werden kann.

Zusätzlich oder alternativ kann auch während und/oder nach dem Ableiten des Treibstoffs aus dem Probentank die Teilmenge des Treibstoffs an die Probenentnahmevorrichtung geleitet werden. An der Probenentnahmevorrichtung kann die Teilmenge zur Analyse in einem Labor entnommen werden.

Der Treibstoff wird im Probentank mit Hilfe einer Mischvorrichtung gemischt. Beispielsweise wenn in dem externen Treibstofftank mehrere zueinander abgetrennte Treibstofftanks angeordnet sind und aus jedem einzelnen Treibstofftank eine Probe in den Probentank geleitet wird, kann durch das Mischen eine gleichmäßige Treibstoffprobe gebildet werden.

Ferner ist es von Vorteil, wenn der Probentank zumindest einen Füllstandssensor umfasst, und dass der Füllstandssensor mit einer Steuerung verbunden ist, wobei die Steuerung bei Erreichen eines vorbestimmten Füllstands das Einleiten des Treibstoffs in den Probentank unterbricht. Dadurch wird beispielsweise ein Überlaufen des Treibstoffs im Probentank verhindert.

Vorteilhaft ist es ebenso, wenn das Einleiten, das Ableiten und/oder das Mischen des Treibstoffs automatisch nach einer vorbestimmten Zeit unterbrochen wird. Beispielsweise kann das Unterbrechen in einem Zeitintervall zwischen 10 s und 300 s durchgeführt werden. Die Zeit nach der eine oder mehrere der oben genannten Tätigkeiten unterbrochen wird, kann aber auch zwischen 40 s und 150s betragen.

Weitere Vorteile der Erfindung sind in den nachfolgenden Ausführungsbeispielen beschrieben. Es zeigt:

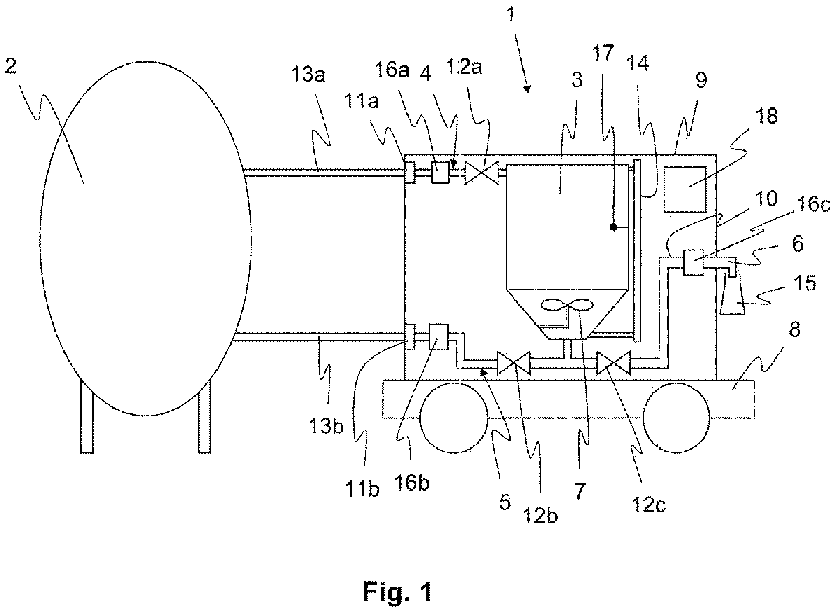

- **Figur 1**: eine schematische Ansicht eines Probenentnahmesystems mit einem daran angekoppelten externen Treibstofftank.

Figur 1 zeigt eine schematische Ansicht eines Probenentnahmesystems 1 mit einem daran angekoppelten externen Treibstofftank 2. In dem externen Treibstofftank 2 befindet sich ein hier nicht gezeigter Treibstoff, von dem eine Probe entnommen werden soll.

Um die Treibstoffprobe aus dem externen Treibstofftank 2 für die Probenahme vorzubereiten, weist das Probenentnahmesystem 1 einen Probentank 3 auf. Das Probenentnahmesystem 1 weist des Weiteren eine Zuleitung 4 auf, über die der Treibstoff in den Probentank 3 eingeleitet werden kann. Über eine Ableitung 5 kann der Treibstoff wieder, wie in diesem Ausführungsbeispiel gezeigt ist, zurück in den externen Treibstofftank 2 abgeleitet werden. Die Ableitung 5 kann alternativ den Treibstoff auch direkt in eine Vorrichtung führen, in der der Treibstoff z. B. verwertet wird.

Das Probenentnahmesystem 1 umfasst ferner eine Probenentnahmevorrichtung 6, die mittels einer Transportleitung 10 mit dem Probentank 3 verbunden ist, um eine Probe des Treibstoffs in einen Behälter 15 abzufüllen. Die Probe in dem Behälter 15 kann dann zu einer Analyse in ein Labor gegeben werden.

Um den Treibstoff in dem Probentank 3 durchzumischen, ist darin eine Mischvorrichtung 7 angeordnet, die beispielsweise einen sich drehenden Rührer umfasst. Das Durchmischen ist insbesondere dann von Vorteil, wenn der externe Treibstofftank 2 mehrere voneinander getrennte Tankabschnitte aufweist und aus mehr als nur einem Tankabschnitt eine Treibstoffprobe in den Probentank 3 geleitet wird. Durch das Durchmischen mit Hilfe der Mischvorrichtung 7 kann eine gleichmäßige Probe erzeugt werden.

Erfindungsgemäß ist das Probenentnahmesystem 1 als eine mobile Anlage ausgebildet. Dazu ist das Probenentnahmesystem 1 auf einem Anhänger 8 angeordnet, um es beispielsweise an einen stationären externen Treibstofftank 2 zu befördern. Um die Mobilität des Probenentnahmesystems 1 zu erreichen, kann es auch direkt auf einem Kraftfahrzeug angeordnet sein.

Das Probenentnahmesystem 1 weist in diesem Ausführungsbeispiel außerdem zwei Kupplungen 11a, 11b auf. Die Kupplung 11a ist dazu ausgebildet, eine Verbindung zwischen der Zuleitung 4 und dem externen Treibstofftank 2 herzustellen. Dazu ist an die Kupplung 11a eine Verbindungsleitung 13a angekoppelt, die den Treibstoff vom externen Treibstofftank 2 zur Zuleitung 4 führt. Über die Zuleitung 4 wird der Treibstoff in den Probentank 3 geleitet.

Die Kupplung 11b ist außerdem dazu ausgebildet, eine Verbindung zwischen der Ableitung 5 und dem externen Treibstofftank 2 herzustellen. An der Kupplung 11b ist dazu die Verbindungsleitung 13b angeordnet, über die der Treibstoff von der Ableitung 5 zurück in den externen Treibstofftank 2 geleitet wird. Mittels der Verbindungsleitung 13b muss der Treibstoff natürlich nicht wieder in den externen Treibstofftank 2 zurückgeleitet werden. Der Treibstoff kann mit der Verbindungsleitung 13b auch in eine Vorrichtung geleitet werden, die den Treibstoff verwertet.

Des Weiteren weist das Probenentnahmesystem 1 drei Ventile 12a, 12b, 12c auf, wobei das Ventil 12a die Zuleitung 4, das Ventil 12b die Ableitung 5 und das Ventil 12c die Transportleitung 6 absperren und/oder freigeben kann.

Das Probenentnahmesystem 1 weist ebenso drei Pumpen 16a, 16b, 16c auf, die den Treibstoff vom externen Treibstofftank 2 in das Probenentnahmesystem 1, vom Probentank 3 zur Probenentnahmevorrichtung 6 und aus dem Probenentnahmesystem 1 pumpen können. Die Pumpe 16a ist dabei in der Zuleitung 4 angeordnet, so dass diese den Treibstoff vom externen Treibstofftank 2 in den Probentank 3 pumpt. Um den Treibstoff aus dem Probentank 3 abzupumpen, ist die Pumpe 16b in der Ableitung 5 angeordnet. Zur Probenentnahme ist die Pumpe 16c in der Transportleitung 10 angeordnet, die den Treibstoff zur Probenentnahmevorrichtung 6 fördert. Obwohl die Pumpen 16a, 16b, 16c so beschrieben sind, dass sie den Treibstoff nur in eine Richtung pumpen, kann es auch sein, dass sie den Treibstoff auch in beide Richtungen pumpen können. Daher kann beispielsweise die Pumpe 16a, die in der Zuleitung 4 angeordnet ist, den Treibstoff auch von dem Probentank 3 zurück in den externen Treibstofftank 2 pumpen. D.h. der Probentank 3 kann auch zusätzlich oder alternativ über die Zuleitung 4 entleert werden. Gleiches gilt natürlich für die beiden anderen Pumpen 16b, 16c.

An dem Probentank 4 ist ferner ein Füllstandssensor 14 angeordnet, mit Hilfe dessen der Füllstand des Treibstoffs im Probentank 3 erkannt werden kann.

In dem Probentank 3 ist des Weiteren ein Temperatursensor 17 angeordnet, mit dessen Hilfe die Temperatur des in dem Probentank 3 befindlichen Treibstoffs gemessen werden kann. Der Temperatursensor 17 kann beispielsweise einen Fühler umfassen, der in dem Probentank 3 angeordnet ist und direkten Kontakt mit dem Treibstoff aufweist.

Das Probenentnahmesystem 1 weist ebenfalls eine Steuerung 18 auf, mittels der das Probenentnahmesystem 1 überwacht und gesteuert werden kann. Die Steuerung 18 ist ferner mittels hier nicht gezeigter Verbindungen mit den Ventilen 12a, 12b, 12c, den Pumpen 16a, 16b, 16c, der Mischvorrichtung 7 und/oder dem Temperatursensor 17 verbunden. Die Steuerung kann, um das Einleiten des Treibstoffs aus dem externen Treibstofftank 2 zu starten, das Ventil 12a öffnen und die Pumpe 16a aktivieren. Außerdem kann die Steuerung den Temperaturmesswert von dem Temperatursensor 17 auswerten und beispielsweise bei einer kritischen Temperatur des Treibstoffs das Einleiten des Treibstoffs in den Probentank 3 unterbrechen und/oder ein Alarmsignal abgeben, um eine Selbstentzündung des Treibstoffs zu verhindern.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Probenentnahmesystem
- 2: externer Tank
- 3: Probentank
- 4: Zuleitung
- 5: Ableitung
- 6: Probenentnahmevorrichtung
- 7: Mischvorrichtung
- 8: Anhänger
- 9: Grundträger
- 10: Transportleitung
- 11: Kupplung
- 12: Ventil
- 13: Verbindungsleitung
- 14: Füllstandssensor
- 15: Behälter
- 16: Pumpe
- 17: Temperatursensor
- 18: Steuerung

## Patentansprüche

1. Probenentnahmesystem (1) zur Entnahme von Treibstoffproben aus einem externen Treibstofftank (2), mit einem Probentank (3) zur Aufnahme des Treibstoffs,
mit zumindest einer Zuleitung (4), mittels der der Treibstoff von dem externen Treibstofftank (2) in den Probentank (3) geleitet werden kann,
mit zumindest einer Ableitung (5), mittels der der Treibstoff aus dem Probentank (3) zurück in den externen Treibstofftank (2) abgeleitet werden kann, und
mit zumindest einer Probenentnahmevorrichtung (6), mit deren Hilfe zumindest eine Teilmenge des Treibstoffs aus dem Probentank (3) entnommen werden kann, wobei das Probenentnahmesystem (1) als eine autarke mobile Anlage ausgebildet ist, **dadurch gekennzeichnet, dass** der Probentank (3) eine Mischvorrichtung (7) umfasst, mittels der der im Probentank (3) vorhandene Treibstoff gemischt werden kann.

2. Probenentnahmesystem (1) nach dem vorherigen Anspruch,
**dadurch gekennzeichnet, dass** das Probenentnahmesystem (1) auf einem Kraftfahrzeug oder einem Anhänger (8) für ein Kraftfahrzeug angeordnet ist und/oder dass das Probenentnahmesystem (1) einen Grundträger (9) umfasst, an dem die übrigen Funktionselemente des Probenentnahmesystems (1) direkt oder indirekt befestigt sind.

3. Probenentnahmesystem (1) nach einem der vorherigen Ansprüche, **dadurch gekennzeichnet, dass** die Probenentnahmevorrichtung (6) mittels einer Transportleitung (10) mit dem Probentank (3) verbunden ist.

4. Probenentnahmesystem (1) nach einem der vorherigen Ansprüche, **dadurch gekennzeichnet, dass** an der Zuleitung (4) und/oder an der Ableitung (5) eine Kupplung (11a, 11b) angeordnet ist, an der eine mit dem externen Treibstofftank (2) verbundene Verbindungsleitung (13a, 13b) angekuppelt werden kann, so dass der Treibstoff von dem externen Treibstofftank (2) über die Verbindungsleitung(en) (13a, 13b) in das Probenentnahmesystem (1) und/oder zurück in den externen Treibstofftank (2) geleitet werden kann.

5. Probenentnahmesystem (1) nach einem der vorherigen Ansprüche, **dadurch gekennzeichnet, dass** die Zuleitung (4), die Ableitung (5), die Verbindungsleitung (13a, 13b) und/oder die Transportleitung (10) Rohrleitungen und/oder flexible Leitungen umfassen.

6. Probenentnahmesystem (1) nach einem der vorherigen Ansprüche, **dadurch gekennzeichnet, dass** die Zuleitung (4), die Ableitung (5), die Verbindungsleitung (13a, 13b) und/oder die Transportleitung (10) eine Gasrückführung für Treibstoffdämpfe aufweist.

7. Probenentnahmesystem (1) nach einem der vorherigen Ansprüche, **dadurch gekennzeichnet, dass** der Probentank (3) einen Temperatursensor (17) zur Messung der Temperatur des Treibstoffs im Probentank (3) umfasst.

8. Probenentnahmesystem (1) nach einem der vorherigen Ansprüche, **dadurch gekennzeichnet, dass** der Probentank (3) zumindest einen Füllstandssensor (14) umfasst.

9. Probenentnahmesystem (1) nach einem der vorherigen Ansprüche, **dadurch gekennzeichnet, dass** das Probenentnahmesystem (1) eine oder mehrere Pumpen (16a, 16b, 16c) aufweist, mit deren Hilfe der Treibstoff vom externen Treibstofftank (2) zum Probentank (3), vom Probentank (3) zur Probenentnahmevorrichtung (6) und/oder vom Probenentnahmesystem (1) zurück zum externen Treibstofftank (2) gepumpt werden kann, und/oder dass das Probenentnahmesystem (1) zumindest ein Ventil (12a, 12b, 12c) aufweist, mit dessen Hilfe die Zuleitung (4), die Ableitung (5), die Transportleitung (10) und/oder die Verbindungsleitung (13a, 13b) abgesperrt werden können.

10. Probenentnahmesystem (1) nach einem der vorherigen Ansprüche, **dadurch gekennzeichnet, dass** das Probenentnahmesystem (1) eine Steuerung (18) umfasst, mit deren Hilfe der Temperatursensor (17) und/oder der Füllstandssensor (14) überwacht und/oder die Pumpe (16a, 16b, 16c) und/oder das Ventil (12a, 12b, 12c) angesteuert werden kann.

11. Verfahren zum Betreiben eines mobilen Probenentnahmesystems (1), das nach einem oder mehreren der vorherigen Ansprüche ausgebildet ist,
wobei das Probenentnahmesystem (1) an einen externen Treibstofftank (2) mittels einer Zuleitung (4) angekoppelt wird,
wobei der Treibstoff zur Probennahme vom externen Treibstofftank (2) in einen Probentank (3) eingeleitet wird,
wobei der Treibstoff im Probentank (3) mit Hilfe einer Mischvorrichtung (7) gemischt wird,
wobei während und/oder nach einem Einleiten des Treibstoffs in den Probentank (3) und/oder während und/oder nach dem Ableiten des Treibstoffs aus dem Probentank (3) eine Teilmenge des Treibstoffs an eine Probenentnahmevorrichtung (6) geleitet wird,
und wobei nach der Probennahme das Probenentnahmesystem (1) wieder abgekoppelt wird.

12. Verfahren nach dem vorherigen Anspruch, **dadurch gekennzeichnet, dass** vor dem Abkoppeln des Probenentnahmesystems (1) der Treibstoff mittels einer Ableitung (5) aus dem Probentank (3), insbesondere zurück in den externen Treibstofftank (2), entleert wird.

13. Verfahren nach einem oder mehreren der Ansprüche 11 oder 12, **dadurch gekennzeichnet, dass** der Probentank (3) zumindest einen Füllstandssensor (14) umfasst, und dass der Füllstandssensor (14) mit einer Steuerung (18) verbunden ist, wobei die Steuerung (18) bei Erreichen eines vorbestimmten Füllstands das Einleiten des Treibstoffs in den Probentank (3) unterbricht.

14. Verfahren nach einem oder mehreren der Ansprüche 11 bis 13, **dadurch gekennzeichnet, dass** das Einleiten, das Ableiten und/oder das Mischen des Treibstoffs automatisch nach einer vorbestimmten Zeit, insbesondere einer Zeit zwischen 10 s und 300 s, vorzugsweise zwischen 40 s und 150 s, unterbrochen wird.

## Claims

1. Sampling system (1) for taking fuel samples from an external fuel tank (2) with a sample tank (3) for receiving the fuel,
with at least one supply line (4), by means of which the fuel can be piped from the external fuel tank (2) into the sample tank (3),
with at least one discharge line (5), by means of which the fuel can be discharged from the sample tank (3) back into the external fuel tank (2), and
with at least one sampling device (6), with the assistance of which at least a partial quantity of the fuel can be taken from the sample tank (3), wherein the sampling system (1) is formed as an autarkic mobile installation,
**characterized in that** the sample tank (3) comprises a mixing device (7), by means of which the fuel present in the sample tank (3) can be mixed.

2. Sampling system (1) according to the preceding claim, **characterized in that** the sampling system (1) is arranged on a motor vehicle or a trailer (8) for a motor vehicle, and/or that the sampling system (1) comprises a base support (9), on which the other functional elements of the sampling device (1) are directly or indirectly fastened.

3. Sampling system (1) according to one of the preceding claims, **characterized in that** the sampling device (6) is connected to the sample tank (3) by means of a transport line (10).

4. Sampling system (1) according to one of the preceding claims, **characterized in that** a coupling (11a, 11b) is arranged on the supply line (4) and/or on the discharge line (5), to which a connecting line (13a, 13b) connected to the external fuel tank (2) can be coupled, such that the fuel can be piped from the external fuel tank (2) via the connecting line(s) (13a, 13b) into the sampling system (1) and/or back to the external fuel tank (2).

5. Sampling system (1) according to one of the preceding claims, **characterized in that** the supply line (4), the discharge line (5), the connecting line (13a, 13b) and/or the transport line (10) comprise pipes and/or flexible lines.

6. Sampling system (1) according to one of the preceding claims, **characterized in that** the supply line (4), the discharge line (5), the connecting line (13a, 13b) and/or the transport line (10) comprise a gas recirculation for fuel vapors.

7. Sampling system (1) according to one of the preceding claims, **characterized in that** the sample tank (3) comprises a temperature sensor (17) for measuring the temperature of the fuel in the sample tank (3).

8. Sampling system (1) according to one of the preceding claims, **characterized in that** the sample tank (3) comprises at least one filling level sensor (14).

9. Sampling system (1) according to one of the preceding claims, **characterized in that** the sampling system (1) comprises one or several pumps (16a, 16b, 16c), with the assistance of which the fuel can be pumped from the external fuel tank (2) to the sample tank (3), from the sample tank (3) to the sampling device (6) and/or from the sampling system (1) back to the external fuel tank (2), and/or that the sampling system (1) comprises at least one valve (12a, 12b, 12c), with the assistance of which the supply line (4), the discharge line (5), the transport line (10) and/or the connecting line (13a, 13b) can be shut off.

10. Sampling system (1) according to one of the preceding claims, **characterized in that** the sampling system (1) comprises a control device (18), with the assistance of which the temperature sensor (17) and/or the filling level sensor (14) can be monitored, and/or the pump (16a, 16b, 16c) and/or the valve (12a, 12b, 12c) can be controlled.

11. Method for operating a mobile sampling system (1), which is formed according to one or more of the preceding claims,
wherein the sampling system (1) is coupled to an external fuel tank (2) by means of a supply line (4),
wherein the fuel for sampling is fed from the external fuel tank (2) into a sample tank (3),
wherein the fuel is mixed in the sample tank (3) with the assistance of a mixing device (7),
wherein during and/or after the feed of the fuel into the sample tank (3), and/or during and/or after the discharge of the fuel from the sample tank (3), a partial quantity of the fuel is piped to a sampling device (6),
and wherein, after sampling, the sampling system (1) is once again disconnected.

12. Method according to the preceding claim, **characterized in that**, before disconnecting the sampling system (1), the fuel is emptied by means of a discharge line (5) from the sample tank (3), in particular back into the external fuel tank (2).

13. Method according to one or more of the claims 11 or 12, **characterized in that** the sample tank (3) comprises at least one filling level sensor (14), and that the filling level sensor (14) is connected to a control device (18), wherein the control device (18) interrupts the feed of the fuel into the sample tank (3) upon reaching a predetermined filling level.

14. Method according to one or more of the claims 11 to 13, **characterized in that** the feed, the discharge and/or the mixing of the fuel is automatically interrupted after a predetermined time, in particular a period between 10 s and 300 s, preferably between 40 s and 150 s.

## Revendications

1. Système de prélèvement (1) d'échantillons destiné à prélever des échantillons de carburant depuis un réservoir de carburant externe (2), comprenant un réservoir d'échantillons (3) destiné à recevoir le carburant,
avec au moins une ligne d'alimentation (4) au moyen de laquelle le carburant peut être acheminé du réservoir de carburant externe (2) dans le réservoir d'échantillons (3),
avec au moins une ligne d'évacuation (5) au moyen de laquelle le carburant peut être évacué du réservoir d'échantillons (3) en retour dans le réservoir de carburant externe (2), et
avec au moins un dispositif de prélèvement (6) d'échantillons, à l'aide duquel au moins une quantité partielle du carburant peut être prélevée depuis le réservoir d'échantillons (3), le système de prélèvement (1) d'échantillons étant conçu comme une installation mobile autonome, **caractérisé en ce que** le réservoir d'échantillons (3) comprend un dispositif de mélange (7), au moyen duquel le carburant présent dans le réservoir d'échantillons (3) peut être mélangé.

2. Système de prélèvement (1) d'échantillons selon la revendication précédente, **caractérisé en ce que** le système de prélèvement (1) d'échantillons est disposé sur un véhicule à moteur ou une remorque (8) pour un véhicule à moteur et/ou **en ce que** le système de prélèvement (1) d'échantillons comprend un élément porteur de base (9) sur lequel les autres éléments fonctionnels du système de prélèvement (1) d'échantillons sont fixés directement ou indirectement.

3. Système de prélèvement (1) d'échantillons selon l'une quelconque des revendications précédentes, **caractérisé en ce que** le dispositif de prélèvement (6) d'échantillons est relié au réservoir d'échantillons (3) au moyen d'une ligne de transport (10).

4. Système de prélèvement (1) d'échantillons selon l'une quelconque des revendications précédentes, caractérisé en ce qu'un couplage (11a, 11b) est disposé sur la ligne d'alimentation (4) et/ou sur la ligne d'évacuation (5), auquel peut être couplé une ligne de liaison (13a, 13b) reliée au réservoir de carburant externe (2), de sorte que le carburant peut être acheminé du réservoir de carburant externe (2) via la ou les lignes de liaison (13a, 13b) dans le système de prélèvement (1) d'échantillons et/ou en retour dans le réservoir de carburant externe (2).

5. Système de prélèvement (1) d'échantillons selon l'une quelconque des revendications précédentes, **caractérisé en ce que** la ligne d'alimentation (4), la ligne d'évacuation (5), la ligne de liaison (13a, 13b) et/ou la ligne de transport (10) comprennent des tuyauteries rigides et/ou des tuyaux flexibles.

6. Système de prélèvement (1) d'échantillons selon l'une quelconque des revendications précédentes, **caractérisé en ce que** la ligne d'alimentation (4), la ligne d'évacuation (5), la ligne de liaison (13a, 13b) et/ou la ligne de transport (10) comprennent un retour de gaz pour les vapeurs de carburant.

7. Système de prélèvement (1) d'échantillons selon l'une quelconque des revendications précédentes, **caractérisé en ce que** le réservoir d'échantillons (3) comprend un capteur de température (17) pour mesurer la température du carburant dans le réservoir d'échantillons (3).

8. Système de prélèvement (1) d'échantillons selon l'une quelconque des revendications précédentes, **caractérisé en ce que** le réservoir d'échantillons (3) comprend au moins un capteur de niveau de remplissage (14).

9. Système de prélèvement (1) d'échantillons selon l'une quelconque des revendications précédentes, **caractérisé en ce que** le système de prélèvement (1) d'échantillons comprend une ou plusieurs pompes (16a, 16b, 16c) à l'aide desquelles le carburant peut être pompé du réservoir de carburant externe (2) au réservoir d'échantillons (3), du réservoir d'échantillons (3) au dispositif de prélèvement (6) d'échantillons et/ou en retour du système de prélèvement (1) d'échantillons au réservoir de carburant externe (2), et/ou **en ce que** le système de prélèvement (1) d'échantillons présente au moins une vanne (12a, 12b, 12c) à l'aide de laquelle la ligne d'alimentation (4), la ligne d'évacuation (5), la ligne de transport (10) et/ou la ligne de liaison (13a, 13b) peuvent être fermées.

10. Système de prélèvement (1) d'échantillons selon l'une quelconque des revendications précédentes, **caractérisé en ce que** le système de prélèvement (1) d'échantillons comprend une commande (18) à l'aide de laquelle le capteur de température (17) et/ou le capteur de niveau de remplissage (14) peuvent être surveillé(s) et/ou la pompe (16a, 16b, 16c) et/ou la vanne (12a, 12b, 12c) peuvent être commandée(s).

11. Procédé pour faire fonctionner un système de prélèvement (1) d'échantillons mobile qui est configuré selon l'une quelconque ou plusieurs des revendications précédentes,
dans lequel le système de prélèvement (1) d'échantillons est couplé à un réservoir de carburant externe (2) au moyen d'une ligne d'alimentation (4),
dans lequel le carburant est introduit depuis le réservoir de carburant externe (2) dans un réservoir d'échantillons (3),
dans lequel le carburant est mélangé dans le réservoir d'échantillons (3) à l'aide d'un dispositif de mélange (7),
dans lequel, pendant et/ou après une introduction du carburant dans le réservoir d'échantillons (3) et/ou pendant et/ou après l'évacuation du carburant depuis le réservoir d'échantillons (3), une quantité partielle du carburant est acheminée dans un dispositif de prélèvement (6) d'échantillons,
et dans lequel, après le prélèvement d'échantillons, le système de prélèvement (1) d'échantillons est à nouveau découplé.

12. Procédé selon la revendication précédente, **caractérisé en ce que**, avant le découplage du système de prélèvement (1) d'échantillons, le carburant est évacué du réservoir d'échantillons (3) au moyen d'une ligne d'évacuation (5), en particulier en retour dans le réservoir de carburant externe (2).

13. Procédé selon l'une quelconque ou plusieurs des revendications 11 ou 12, **caractérisé en ce que** le réservoir d'échantillons (3) comprend au moins un capteur de niveau de remplissage (14), et **en ce que** le capteur de niveau de remplissage (14) est relié à une commande (18), la commande (18) interrompant l'introduction du carburant dans le réservoir d'échantillons (3) lorsqu'un niveau de remplissage prédéterminé est atteint.

14. Procédé selon l'une quelconque ou plusieurs des revendications 11 à 13, **caractérisé en ce que** l'introduction, l'évacuation et/ou le mélange du carburant est interrompu(e) automatiquement après un temps prédéterminé, en particulier un temps compris entre 10 s et 300 s, de préférence entre 40 s et 150 s.
